# EUROPEAN PATENT APPLICATION

(11) **EP 4 685 086 A1**
(43) Date of publication of application: **28.01.2026**
(21) Application number: 25190479.3
(22) Date of filing: 18.07.2025
(51) Int. Cl.: B65G 33/24, B65G 33/02, B65G 33/04, B65G 33/06

(54) **A DEVICE FOR MOVING STERILE ELEMENTS**

(30) Priority: 22.07.2024 IT 202400016921
(71) Applicant: Phizero S.r.l., 48018 Faenza (RA) (IT)
(72) Inventor: MAZZOTTI, Gabriele, 48018 FAENZA (RA) (IT); MAZZOTTI, Pier Paolo, 48018 FAENZA (RA) (IT)
(74) Representative: Fabbriciani, Simone

(57) **Abstract**

Described is a movement device (1) for sterile elements, immersed in a sterilisable environment, which comprises, in a load-bearing frame (2), a screw feeder (3, 3') suitable for rotating about its central axis (30, 30') and extending along a longitudinal direction (X). The screw feeder (3, 3') is for feeding sterile elements (F) using motor means (91, 92, 93).

A fundamental feature of the screw feeder (3, 3') is that it has a conduit (4, 4') which is at least partly hollow inside it.

The conduit (4, 4') is in communication with the outside by means of holes (41, 41') and has a controlled access point (PAC), for connection or disconnection of the conduit (4, 4') with one user device (5, 6, 7) at a time.

## Description

This invention relates to a movement device for sterile elements, particularly for vials, syringes, ampoules, bottles and the like, in sterile environments.

The invention also relates to a method for moving the sterile elements using the movement device according to the invention and a process for cleaning a sterilisable environment intended for the production of sterile elements, again using the movement device described in this patent application.

For handling aseptic pharmaceutical products, VHP-sanitised and Grade A-maintained isolators are commonly used.

In isolators of this type, screw feeders, or worm screws, may be mounted for moving and feeding ampoules (vials) in various industrial and pharmaceutical processes. These devices are essential in order to ensure a safe, controlled and continuous transport of the vials within the isolators where, as stated, a sterile environment free from contamination must be maintained.

In general, the screw feeders consist of a central shaft on which a helical spiral is wound. When the shaft rotates, the spiral creates a force that pushes the vials along the direction of the shaft axis.

The pitch of the spiral (that is, the distance between two consecutive windings) determines the speed and precision of the movement of the vials. The vials are positioned between the turns of the screw feeder and are made to advance with a constant and controlled movement as the shaft rotates.

The feed speed of the vial can be adjusted by varying the rotation speed of the shaft and the geometry of the spirals formed on the screw feeders themselves. This is important in order to synchronize the movement of the vials with other operations inside the isolator such as filling, closing vials or inspection.

In recent years, step screen systems have been widely used for moving the vials, which have replaced the screw feeders previously in use to guarantee the release of the movement system from the vials during the weighing step. Such a system is designed to obtain an alternating motion rather than continuous feeding, thus allowing the vials to advance by a certain stretch using a comb unit, stopping for a short time, stopping the vial at the desired working position and finally leaving the vial free without any contact, and then advancing again.

This alternating motion is useful for perfectly synchronising the positioning of the vials with the automatic weighing, filling or inspection operations. The vials are moved exactly to the desired position and left free from contact with the step screen comb unit for the time needed to complete the operation.

In this way, the vial does not slide on the teeth of the comb unit when the comb enters, but only on the sliding track, producing a reduced quantity of particulate close to the vial.

However, the device itself must make many movements necessary to return the step screen to the starting position and, consequently, many scrapings are produced which, even though far from the vial, are very close to each other, making the cleaning and sanitising difficult. In effect, since everything is sanitised with vaporized hydrogen peroxide (VHP), the parts in direct and indirect contact with the product are dismantled, positioned in an autoclave, protected with special sacks and then returned inside the isolator to be lastly reassembled with the gloves.

It is therefore clear that this system requires careful and complicated maintenance; therefore, demanding both in terms of time and costs.

The aim of the invention is to overcome the above-mentioned drawbacks and make a movement device for sterile elements, particularly for use in environments which can be sterilised by superheated steam, which is simpler to use compared with the prior art systems and which, in particular, prevents any type of friction on the weighing stations during the step of stopping the products transported.

In the context of the above-mentioned purpose, an aim of the invention is to provide a movement device for sterile elements which is easy to clean, in such a way as to simplify the cleaning and maintenance operations. Another aim of the invention is to provide a movement device for sterile elements which ensures an excellent degree of sterilisation without the risk of contamination.

Yet another aim of the invention is to provide a movement device for sterile elements, particularly for use in sterilisable environments which, whilst guaranteeing the best reliability and sterility, is also economically competitive.

This purpose, as well as these and other aims, which are described in more detail below, are achieved, according to the invention, comprising the technical features described in one or more of the appended claims. The dependent claims correspond to possible different embodiments of the invention.

In particular, according to a first aspect, this invention relates to a movement device for sterile elements, such as bottles, syringes, ampoules and the like (known as "vials"), particularly for use in sterilisable environments which comprises, in a load-bearing frame, a screw feeder, which has a succession of loops and peaks, suitable for rotating about its central axis. The screw feeder allows feeding of the sterile elements by motor means and extends along a longitudinal direction which preferably, but not necessarily, is parallel to the central axis. The distinctive feature of the screw feeder is that it has a conduit which is at least partly hollow inside it. The conduit is in communication with the outside by means of holes defined on the outer surface of the screw feeder. Further, the conduit has a controlled access point, for example by means of a valve or a system of valves, for connecting or disconnecting the conduit with a user device different each time.

There are also holes defined on the outer surface of the screw feeder which allow the conduit to communicate with the outside.

For this reason, the screw feeder may also be advantageously used for other purposes other than the mere purpose of pushing the sterile elements. According to the preferred embodiment, there are two substantially identical screw feeders, both having one or more of the features according to the invention, suitable for simultaneously pushing the sterile elements.

The two screw feeders are positioned in such a way as to allow the feeding of the sterile elements along the longitudinal direction and have preferably, but not necessarily, the respective axes of symmetry substantially parallel to each other.

Advantageously, a first user device comprises a suction device for channelling a flow of sterile air which strikes the sterile elements during the filling step. The suction is achieved by the above-mentioned holes. The flow normally arrives in a one-way fashion from above the sterile elements and tends to be turbulent or to escape close to the vials. In this way, there is the certainty that the flow is linear, starting from above the sterile elements and going towards the screw feeders, and therefore complies with the so-called "first air" principle, that is to say, it must be guaranteed that the air which touches the sterile elements has not been in contact with other bodies beforehand.

Advantageously, a second user device comprises a tank for collecting the washing fluid used during the CIP ("cleaning in place") cleaning step. There are also means for injecting the washing fluid towards the outside using the holes defined on the outer surface of the screw feeder and used for suction during the step for filling the sterile elements.

In other words, instead of sucking air from these holes and from the hollow conduit, washing fluid is sprayed on the parts which need to be cleaned.

In this regard, advantageously, the holes are only made on the peaks of the screw feeder, thus appearing between one vial and another and not on the loops, where the screw feeder touches the vial, thus avoiding damage to the vials with the edge of the communication holes.

In particular cases, such as the device described in Italian patent application No. 102023000024198, filed in the name of the same Applicant, a third user device comprises a discharge of steam towards a unit outside the sterilisable environment.

In fact, that prior art document, describes a double-container system, both of which can be sterilised by superheated steam, which - by means of an automatic and autonomous process for sterilising the process instruments - greatly limits or eliminates the need for intervention by the operator during normal operation of the system, without a supporting autoclave or gloves, since there are no preparation operations in an aseptic condition.

Another aspect of the invention relates to the profile of the screw feeders.

Advantageously, each loop of the screw feeder is designed by a function according to a system of cylindrical coordinates relative to the central axis. The function has an axial coordinate, an angular coordinate and a radial coordinate. According to this function, the Applicant has provided a variation in the radial coordinate at a selected dwell position of the sterile element, corresponding to the weighing zone, that is to say, where the weighing scales are located which must weigh the contents of the sterile element. Thus, while the screw feeder rotates, until it is in phase with the vial, it is pushed forward by an end portion of the peak.

Therefore, without going back, the screw feeder continues to rotate about itself in the same direction, but the shape of the loop allows it to be moved away from the profile of the screw feeder, whilst keeping the vial stationary. In practice, the variation in the radial coordinate advantageously corresponds to a negative value of the derivative relative to the angle describing the curve, during the step of releasing the end portion of the loop and the vial.

On the other hand, the derivative will have a positive value in the portions of the loop corresponding to the steps of acceleration of the movement of the sterile element, so the derivative will increase up to the point of maximum acceleration.

As mentioned, however, the derivative will have a negative value at the selected dwell position of the sterile element.

The trend of this function draws the profile of the loops of each screw feeder in the portions which require contactless dwell. The other portions maintain a standard periodic profile.

A further aspect of the invention relates to the method for moving the sterile elements using the movement device according to this invention.

The method comprises the steps of feeding the sterile elements along the longitudinal direction by pushing them by a pair of screw feeders, with the respective axes of symmetry 30, 30' substantially parallel to each other, in such a way that there is contact between the sterile element and the screw feeders only at the end portion of each peak. Next, the sterile elements must be stopped at the selected dwell step, so that they can be weighed without contact with the screw feeder.

The movement method comprises the step of sucking air from holes made on the screw feeder, for communication between the conduit and the outside, in such a way as to channel a flow of sterile air which strikes the sterile elements during the step of filling them.

Lastly, there is a process for cleaning a sterilisable environment intended for producing sterile elements, using the movement device according to this invention, which comprises the following steps.

A washing fluid is expelled from the holes, forming a jet towards the outside and at least one of the two screw feeders is rotated, in such a way as to direct the jet to the parts that need cleaning.

Further features and advantages of the invention are more apparent in the detailed description below, with reference to a preferred, non-limiting embodiment of the superheated steam sterilisable container illustrated by way of example and without limiting the scope of the invention, with the aid of the accompanying drawings, in which:

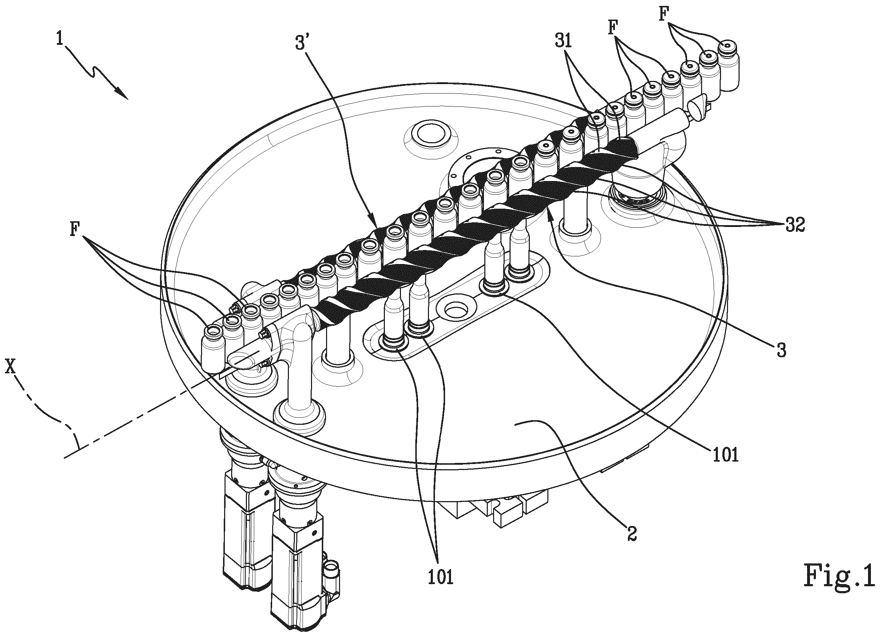

Figure 1 is a perspective view of a movement device 1 for sterile elements immersed in a sterilisable environment having two screw feeders 3 and 3' parallel to each other;

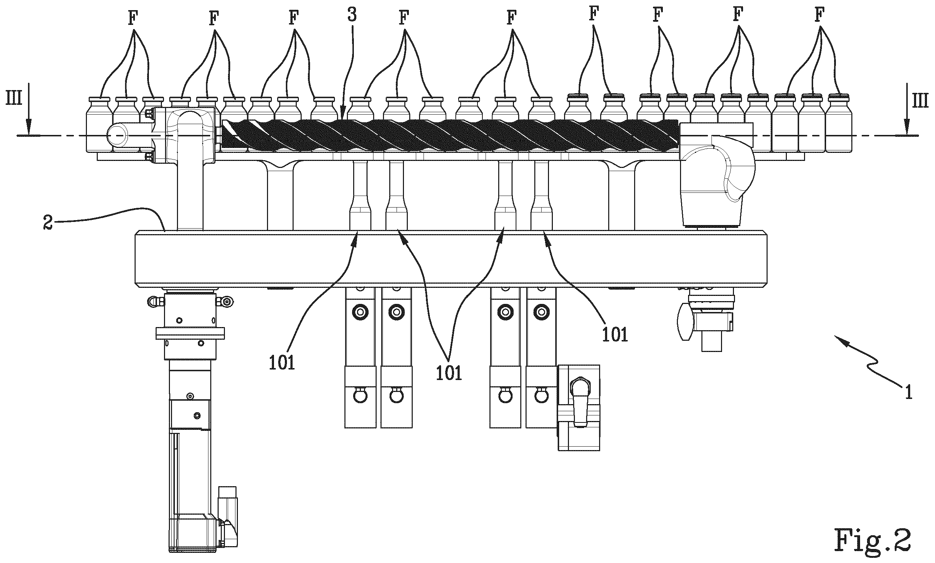

Figure 2 is a side view the device 1 of Figure 1;

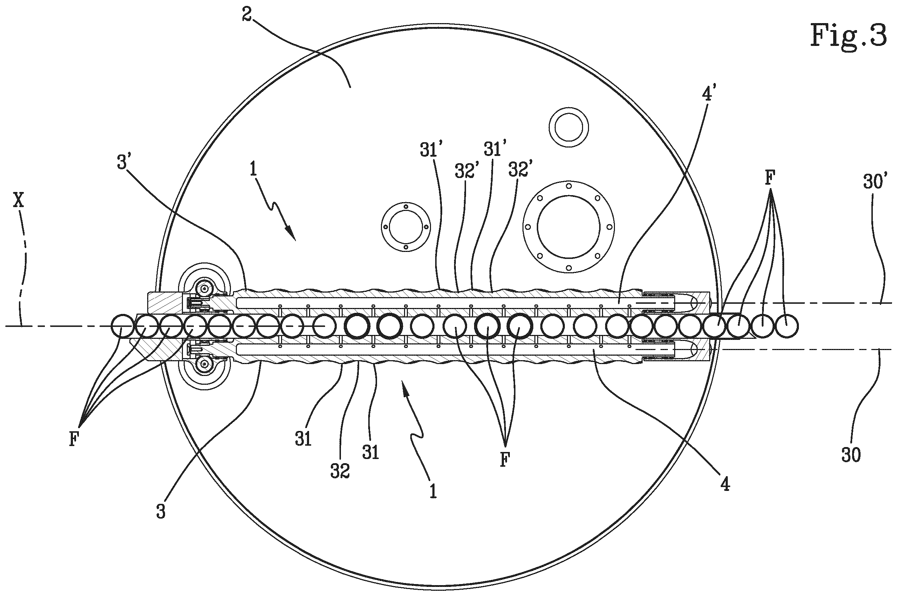

Figure 3 is a cross-section of the device 1 of Figure 2 through line III-III;

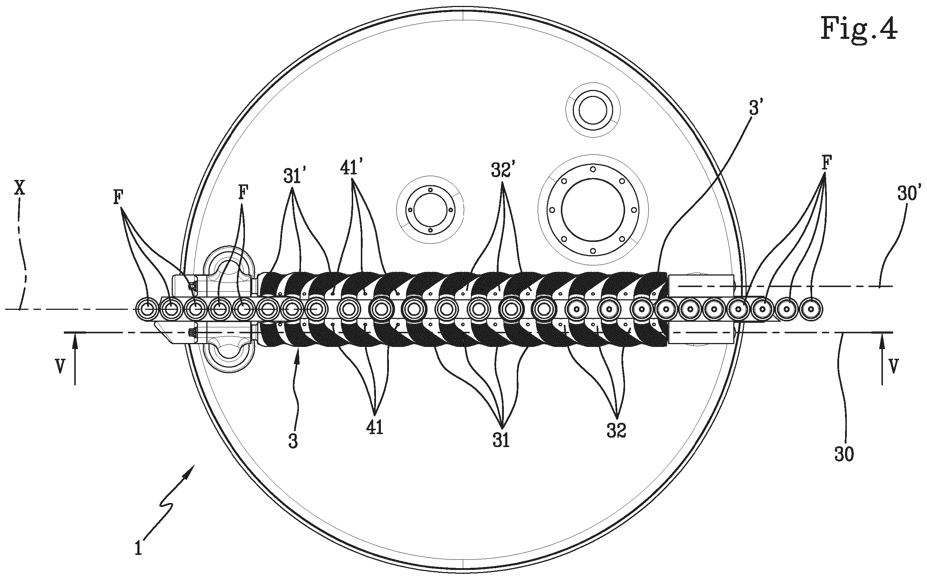

Figure 4 is a plan view of the device of Figure 1;

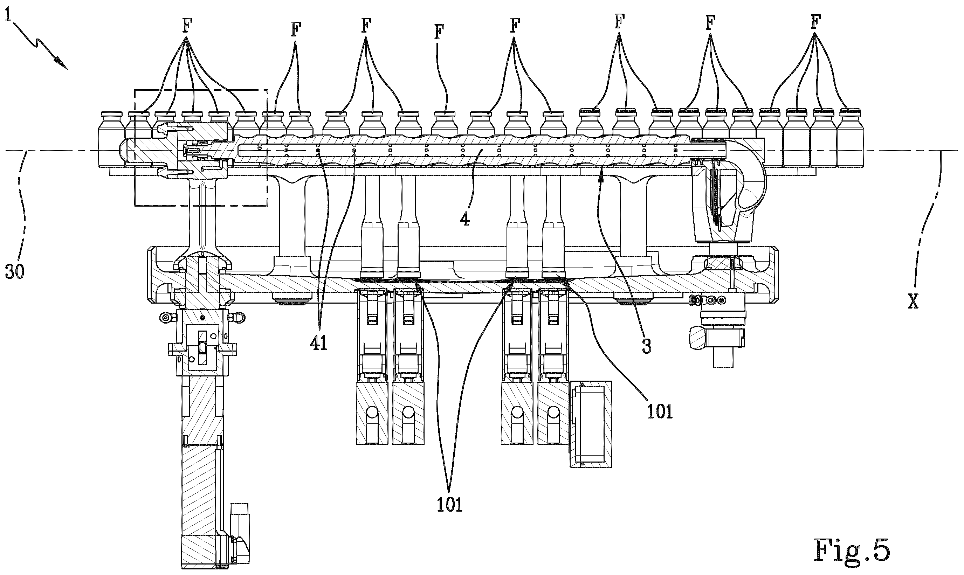

Figure 5 is a cross-section of the device 1 of Figure 2 through line V-V;
Figure 6 illustrates an enlargement of a detail of Figure 5;
Figure 7 schematically illustrates the system of user devices 5, 6 and 7 connectable to the screw feeders 3 and 3' by means of the controlled access point PAC;
Figure 8A illustrates, for each screw feeder 3 (3') in rotation, the curve drawn by the point of contact between the ampoule F and the loop 32 (32') being pushed, and that drawn by the point of contact between the ampoule F and the peak 31 (31') being braked, both with reference to the axial coordinate X and radial coordinate R;
Figure 8B illustrates, for each screw feeder 3 (3') in rotation, the derivative of the curves of Figure 8A relative to the angle A.

The above-mentioned drawings show a preferred embodiment of a movement device for sterile elements, particularly for sterilisable environments, which comprises a load-bearing frame 2 for a pair of screw feeders 3 and 3' which by motor means rotates around the relative central axis 30 and 30', allowing sterile elements, such as ampoules F, to feed along a longitudinal direction X, parallel to the central axis 30 and 30'.

In practice, the screw feeders 3 and 3' define a passageway inside of which the ampoules F are moved.

Each screw 3 and 3' has a succession of peaks 31, 31' and loops 32, 32'; only the loops 32 and 32' and only in a relative end portion do they come into contact with the ampoules F, initially amassed at the inlet of the passageway defined by the screw feeders 3 and 3', pushing them forward. Inside them, the screw feeders 3 and 3' have a conduit 4 and 4' which is partly hollow: an end part is, in effect, occupied by the motor means. Each conduit 4 and 4' is in communication with the outside by means of a plurality of holes 41 and 41' defined on the peaks 31 and 31' which alternate with the loops 32 and 32' of the screw feeders 3 and 3' along the relative central axis 30 and 30'.

In particular, the holes 41 and 41' are defined on the peaks 31 and 31' of the screw feeders 3 and 3' so as to appear between one ampoule F and another, whilst they are not present where the screw feeder touches the ampoule F.

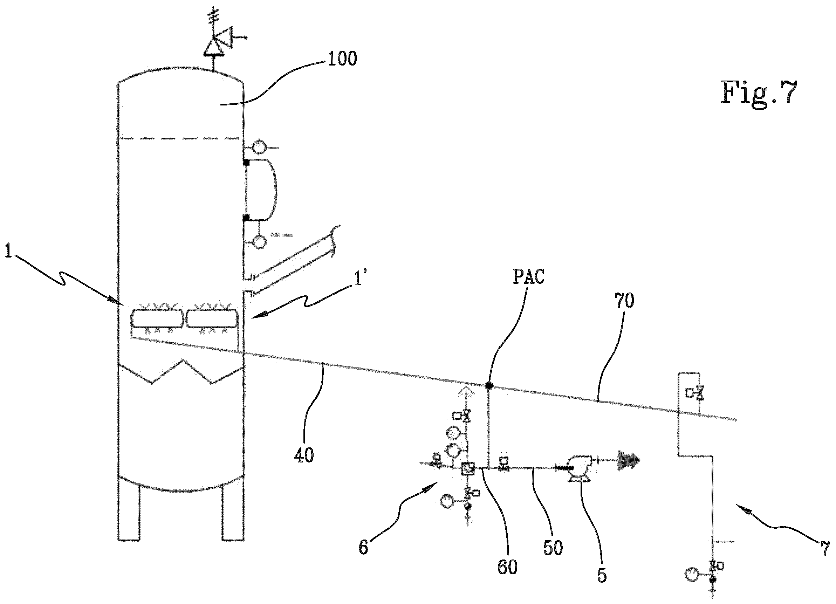

With reference to Figure 7, the conduit 4 and 4' has a controlled access point PAC, which can be reached by means of a pipe 40, where a valve (or a system of valves) adjusts its connection with a different user device each time.

A first user device comprises a suction device 5 for channelling a flow of sterile air which strikes the sterile elements, connected by a first channel 50 to the controlled access point PAC.

Above the ampoules F, in effect, the flow of air arrives in a one-way fashion but tends to be turbulent or to escape away close to the ampoules F. In this way, the flow is channelled between the inlet above the ampoules F and the outlet on the screw feeders 3 and 3', guaranteeing the above-mentioned "first air" principle.

A second user device comprises a tank 6 for collecting the washing fluid and connected by a second channel 60 to the controlled access point PAC. In this case, there are also means for injecting the washing fluid towards the outside, where it is shot through the holes 41 and 41'

As shown in the diagram in Figure 7, the channels 50 and 60 may have a stretch in common.

In practice, the holes 41 and 41' suck sterile air whilst the ampoules F are being filled, whilst they spray the washing fluid during CIP cleaning.

According to the variant wherein the device 1 is mounted on a pressurised container 100 sterilised using saturated steam or VHP, there is a third user device comprising a discharge 7 of steam towards a unit outside the sterile environment, connected by a third channel 70 to the controlled access point PAC.

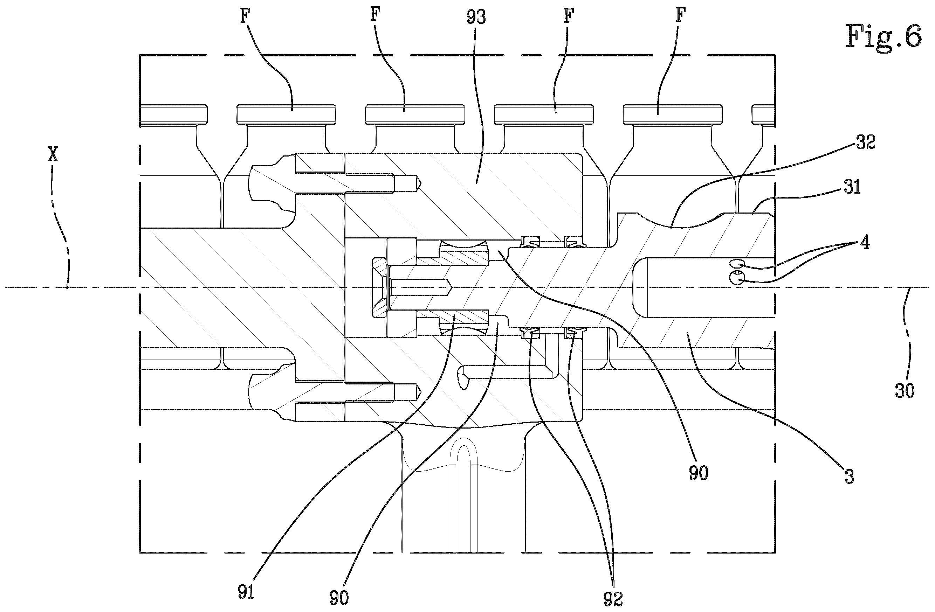

With reference to Figure 6, the motor means of the screw feeders comprise a gearing 91, integral with the screw feeder 3 (or 3') supported by bearings 92. The latter define, with a hub 93 and the gearing 91, a chamber 90 suitable for being constantly vacuum sealed in such a way as to prevent contamination of the aseptic zone.

The particular profile of the loops 32 and 32' of the screw feeders 3 and 3' is designed by a function which depends on a system of cylindrical coordinates with respect to the central axis 30 and 30', in which there is an axial coordinate, an angular coordinate and a radial coordinate.

The profile design was conceived starting from the premise of achieving a selected dwell position, in which each ampoule is above a scale in order to be weighed (and cannot therefore be in contact with the screw feeder 3 or 3').

The function therefore has a variation in the radial coordinate at the selected position.

For this reason, whilst the screw feeders 3 and 3' rotate, they contribute to pushing the ampoules F forwards, along the longitudinal direction X. Once the ampoule F reaches the weighing zone, the screw feeder continues to rotate in the same direction, without reversing the motion, thanks to the particular shape of the loop 32 and 32'.

In effect, at that point, the loop 32 and 32' will have a curvature having a negative derivative.

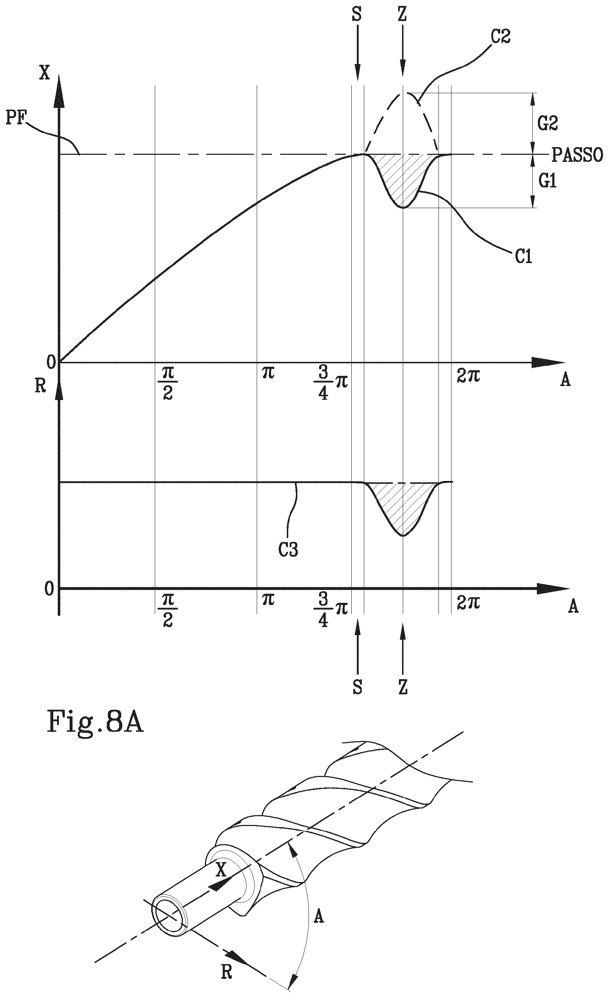

In practice, during the rotation, at the step of contact between the end portion of the respective peak 31 and 31' the derivative relative to the angle which describes the curve adopts a zero value, during the steps of acceleration of the movement of the ampoule F the derivative has a positive value (which increases up to the point of maximum acceleration), and it will have a negative value at the selected dwell position of the ampoule F. More in detail, with reference to Figure 8A, labelled X (axial reference), R (radial reference) and A (angular reference) the cylindrical coordinates which describe the screw feeder 3 (or 3'), the curve C1 which describes the pushing point of contact between the screw feeder 3 (or 3') and the ampoule F increases as the screw feeder 3 (or 3') rotates, until reaching a stasis step, which occurs before reaching the weighing zone Z, where the weighing scales 101 are located. The point of contact between the ampoule F and the loop 32 (32') remains constant for some radians during the stasis step and then returns increasingly to the weighing zone Z. After passing the weighing zone Z, the curve C1 increases its axial value and then returns to the value adopted during the stasis step, until the end of the step, when the next peak 31 (31') restarts. In practice, a bell-shaped curve C1 is drawn, facing downwards, with the lowest point corresponding to the weighing zone Z. Yet another trend is the curve C2 which describes the point of contact when braking between the ampoule F and the peak 31 (31') of the screw feeder 3 (3'). After the growth step which is superposed on the curve C1 which describes the pushing point of contact, upon reaching the stasis step, the curve C2 remains constant for a few radians and then moves constantly forward to the weighing zone Z. After passing the weighing zone Z, the point of contact during braking decreases its axial value and then returns to the value adopted during the stasis step, until the end of the step, when the next peak 31 (31') restarts. This time, therefore, the curve C2 drawn will be a bell facing upwards, with the highest point at the weighing zone Z.

For this reason, in the weighing zone Z an axial clearance GX and GX' is determined around the ampoule F, which adopts maximum values in the weighing zone Z (at the above-mentioned lowest and highest points), both relative to the contact with the pushing loop 32 (32'), GX, and relative to the contact with the braking peak 31 (31'), GX'.

As regards the radial trend of the point of contact between the ampoule F and the loop 32 (32'), it should be noted how, similarly to what was said for the axial case, the curve C3 representing it remains constant until the stasis step and then returns increasingly up to the weighing zone Z. After passing the weighing zone Z, the point of contact increases its radial value and then returns to the value adopted during the stasis step, until the end of the step, when the next peak 31 (31') restarts, allowing the curve C3 to form, also in this case, a bell facing downwards. Consequently, in the weighing zone Z, a radial clearance GR is determined around the ampoule F between the profile of the pushing loop 32 (32'), and the ampoule F.

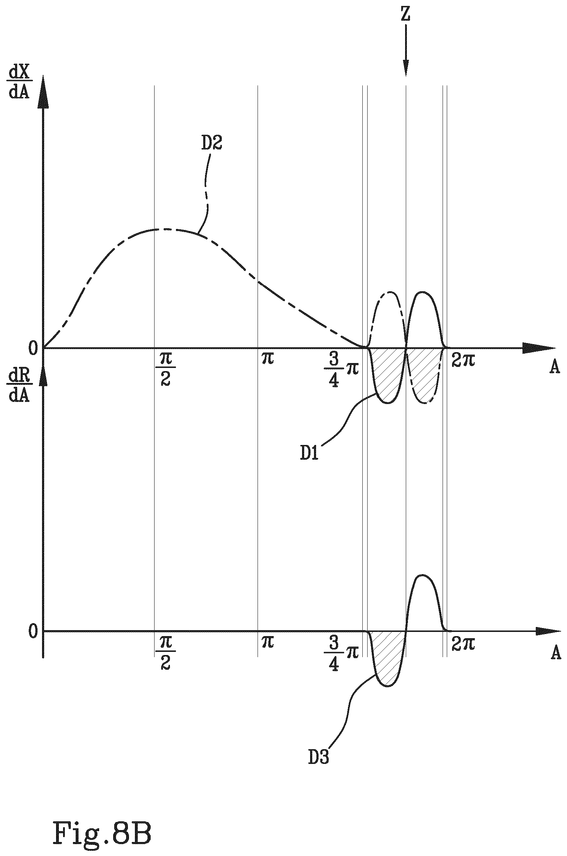

Looking at the derivative of the same curves relative to the angle A, described in Figure 8B, the behaviour of the axial (dX/dA) and radial (dR/dA) derivative has at least one portion with a negative trend in the proximity of the weighing zone Z.

More in detail, looking at the derivative D1 of the axial component X of the point of contact between the ampoule F and the loop 32 (32'), pushing relative to the angle A, it can be seen how, between the start of the stasis step and the end of the step, a period which encloses the weighing zone Z, the derivative D1 draws a curve facing downwards in an angle portion (decreasing and then rising), where the derivative dX/dA has a negative value and then zero at the weighing zone Z. The curve D1 has two bells, the first with values less than zero, therefore a negative derivative, the second with values greater than zero until the end of the step.

With regard to the derivative D2 of the axial component X relative to the angle A for the point of contact between the ampoule F and the peak 31 (31'), during braking, the trend is anti-symmetrical relative to the pushing contact. Initially, in fact, the derivative D2 draws a bell with positive derivative values, cuts the X-axis at the weighing zone Z and, after passing the weighing zone, the curve D2 falls, therefore forming a bell facing downwards, where dX/dA has a negative value. The curve D2 has two bells, the first with values greater than zero, therefore with a positive derivative, and the second with values less than zero, therefore with a negative derivative.

In other words, there is always at least one portion of the geometries for feeding the vials which has a negative derivative of the axial component, both in the case of the point of contact when pushed and when braking, in the loop 32 (32').

Similarly, the curve D3 which is a derivative of the radial component R relative to the angle A, after the stasis step, has a bell with values less than zero where the derivative dR/dA has a negative value and then zero at the weighing zone Z. After passing the weighing zone, the curve D3 has a symmetrical value but the derivative is positive up to the end of the step. The curve D3 has two bells, the first with values less than zero and therefore with a negative derivative, the second with values greater than zero, therefore with a positive derivative.

Therefore, through the curves C1-C3 and D1-D3 just seen, the profiles of the loops 32 (32') of the screw feeder 3 (3') can advantageously be constructed.

From the above description it may be seen how the invention achieves the preset purpose and aims and in particular a movement device has been made for sterile elements which is particularly simple to clean, thanks to the possibility of spraying the washing fluid directing the jet by rotating the screw feeders.

Moreover, the possibility of channelling the flow of sterile air during the step of filling the sterile elements guarantees the maximum degree of protection, avoiding any contamination.

Another advantage of the invention is due to the production of the particular profile of the screw feeders which allows the sterile elements to move forward and be weighed precisely, without making backward or complicated movements.

The invention described can be modified and adapted in several ways without thereby departing from the scope of the inventive concept. Moreover, all the details of the invention may be substituted by other technically equivalent elements.

In practice, the materials used, as well as the dimensions, may be of any type, depending on requirements, provided that they are consistent with their production purposes.

## Claims

1. A movement device (1) for sterile elements, immersed in a sterilisable environment, comprising, on a load-bearing frame (2), a screw feeder (3, 3') extending along a longitudinal direction (X) and suitable for rotating about its central axis (30, 30');
the screw feeder (3, 3') feeding sterile elements (F) using motor means (91, 92, 93);
**characterised in that** the screw feeder (3, 3') has a conduit (4, 4') which is at least partly hollow inside;
the conduit (4, 4') being in communication with the outside by means of holes (41, 41') and having a controlled access point (PAC), for connection or disconnection of the conduit (4, 4') with one user device (5, 6, 7) at a time.

2. The device (1) according to claim 1, wherein the screw feeder (3, 3') has a succession of loops (32, 32') and peaks (31, 31'); only the peaks (31, 31') and only in a relative end portion, being suitable for making contact with the sterile elements (F).

3. The device (1) according to claim 2, wherein the holes (41, 41') are only formed in one or more of the peaks (31, 31') of the screw feeder (3, 3').

4. The device (1) according to claim 3, wherein a first user device comprises a suction device (5) for channelling a flow which strikes the sterile elements.

5. The device (1) according to claim 3, wherein a second user device comprises a tank (6) of the washing fluid and means for injecting the washing fluid towards the outside by means of the holes (41, 41').

6. The device (1) according to claim 3, wherein a third user device comprises a discharge (7) for steam towards a unit outside the sterilisable environment.

7. The device (1) according to any one of claims 2 to 6, wherein each loop (32, 32') of the screw feeder (3, 3') is designed by a function according to a system of cylindrical coordinates with respect to the central axis (30, 30') and having an axial coordinate, an angular coordinate and a radial coordinate;
the function having a variation in the radial coordinate at a selected dwell position of the sterile element (F).

8. The device (1) according to claim 7, wherein the variation in the radial coordinate defining the trend of loops (32, 32') and peaks (31, 31'), has, at least in a portion of the screw feeder (3, 3'), a negative value of its derivative relative to the angle which describes the curve.

9. The device (1) according to claim 7 or 8, wherein the variation in the axial coordinate defining the trend of loops (32, 32') and peaks (31, 31'), has, at least in a portion of the screw feeder (3, 3'), a negative value of its derivative relative to the angle which describes the curve.

10. The device (1) according to any one of claims 1 to 9, comprising a pair of screw feeders (3, 3') positioned in such a way as to allow the feeding of the sterile elements (F) along the longitudinal direction (X);
the screws (3, 3') having respective axes of symmetry (30, 30') substantially parallel to each other.

11. A method for moving sterile elements (F) by means of a movement device (1) immersed in a sterilisable environment according to at least one of claims 1 to 9, comprising the steps of:
- feeding the sterile elements (F) along a longitudinal direction (X) by pushing them by a pair of screw feeders (3, 3'), having a succession of loops (32, 32') and peaks (31, 31') and with the respective axes of symmetry (30, 30') substantially parallel to each other, in such a way that there is contact between the sterile element (F) and screw feeder (3, 3') only at the end portion of each peak (31, 31');
the profile of each loop (32, 32') of each screw feeder (3, 3') being designed by a function having a variation of a radial coordinate such that, at the point of contact between the end portion of each peak (31, 31') and the sterile element (F), the derivative relative to the angle which describes the curve of the loop (32, 32') adopts a zero value;
- stopping the sterile elements (F) at a selected dwell step, so as to allow the weighing;
the profile of each loop (32, 32') of each screw feeder (3, 3') being designed by a function having a variation of a radial coordinate such that, at the dwell step, the derivative relative to the angle describing the curve of the loop (32, 32') adopts a negative value at least in a portion of the screw feeder.

12. The movement method according to claim 11, comprising the step of sucking air from holes (41, 41') made only in one or more of the peaks (31, 31') in such a way as to channel a flow which strikes the sterile elements (F) during the step of filling them.

13. A process for cleaning a sterilisable environment intended for producing sterile elements (F), using a movement device (1) immersed in a sterilisable environment according to any one of claims 1 to 9, comprising the following steps:
- expelling a washing fluid from holes (41, 41') made only in one or more peaks (31, 31') of a screw feeder (3, 3') forming a jet towards the outside;
- rotating the screw feeder (3, 3'), in such a way as to direct the jet to the parts selected for being cleaned.
